# EUROPEAN PATENT SPECIFICATION

(11) **EP 2 791 760 B1**
(45) Date of publication and mention of the grant of the patent: **04.09.2019**
(21) Application number: 12857321.9
(22) Date of filing: 14.12.2012
(51) Int. Cl.: G06F 3/01, G06F 3/14, G06F 3/0485, G06F 3/0487, G06F 1/16

(54) **DISPLAY APPARATUS AND METHOD OF CHANGING SCREEN MODE USING THE SAME**
ANZEIGEVORRICHTUNG UND VERFAHREN ZUM ÄNDERN DES BILDSCHIRMMODUS DAMIT
APPAREIL D'AFFICHAGE ET PROCÉDÉ DE CHANGEMENT D'UN MODE D'ÉCRAN UTILISANT CELUI-CI

(30) Priority: 15.12.2011 KR 20110135333
(43) Date of publication of application: 22.10.2014
(73) Proprietor: Samsung Electronics Co., Ltd., Suwon-si, Gyeonggi-do 443-742 (KR)
(72) Inventor: KWAK, Ji-yeon, Seoul 151-801 (KR); KANG, Kyung-a, Seoul 135-270 (KR); KIM, Hyun-jin, Seoul 137-773 (KR); SEO, Joon-kyu, Suwon-si Gyeonggi-do 443-370 (KR)
(74) Representative: HGF Limited
(86) International application number: PCT/KR2012/010895
(87) International publication number: WO 2013/089476

(56) References cited:
- EP-A2- 2 202 624
- KR-A- 20100 027 502
- KR-A- 20110 088 872
- US-A1- 2007 205 997
- US-A1- 2010 011 291
- US-A1- 2010 045 705
- US-A1- 2010 164 888
- US-A1- 2011 057 873
- US-A1- 2011 227 822
- US-A1- 2011 227 822
- US-B1- 6 567 101

## Description

### Technical Field

The present invention relates generally to a display apparatus and a method of changing a screen mode using the same, and more particularly, to a display apparatus including a display unit which is bendable by external pressure and a method of changing a screen mode using the same.

### Background Art

Display apparatuses including flexible displays have been recently developed, where a flexible display refers to a display which can be folded or bent like paper, unlike the generally used rigid flat panel displays.

The flexible display may be folded or bent in any position, and thus a method of using the flexible display folding or bending operations as menu selection signals to perform various types of operations is required.

Specifically, there is a need for a method of realizing a particular operation corresponding to a direction in which the flexible display is bent, in order to transmit unique effect of the flexible display to a user.

US2011/227822 A1 discloses flexible devices and related methods of use. EP2202624 A2 discloses a flexible display device where displayed content may be switched according to a position and bend level of the display device.

US2007/205997 A1 discloses a method and apparatus for controlling a visual display by bending.

US2010/011291 A1 discloses a user interface device and method for a physically flexible device.

US6567101 B1 discloses a system and method utilizing motion input for manipulating a display of data.

US 2010/0045705 A1 discloses a set of interaction techniques for obtaining input to a computer system based on methods and apparatus for detecting properties of the shape, location and orientation of flexible display surfaces, as determined through manual or gestural interactions of a user with said display surfaces.

### Disclosure of Invention

### Technical Problem

Accordingly, the present invention has been made to solve the above-mentioned problems and disadvantages occurring in the prior art, and the present invention provides a display apparatus which includes a display unit which is bendable by an external pressure and changes a screen mode according to a bending direction of the display unit to improve user experience, and a method of changing a screen mode using the same.

### Solution to Problem

The invention is defined by the independent claims 1, 9 and 13. The dependent claims define advantageous embodiments.

### Advantageous Effects of Invention

As described above, according to various exemplary embodiments, a screen mode may be adjusted according to a bending direction of a display unit. Therefore, feeling effect of a user may improve according to bending of the display unit.

### Brief Description of Drawings

The above and/or other features, aspects and advantages of the present invention will be more apparent from the following detailed description taken in conjunction with the accompanying drawings, in which:
FIG. 1 is a block diagram illustrating a structure of a display apparatus according to an embodiment of the present invention;
FIGS. 2(a) through 2(c) are diagrams illustrating a display unit which is bent by an external pressure according to an embodiment of the present invention;
FIGS. 3A through 3G are diagrams illustrating an operation of the display unit which is concavely bent along with a screen according to an embodiment of the present invention;
FIGS. 4A through 4C are diagrams illustrating an operation of the display unit which is not bent according to an embodiment of the present invention;
FIGS. 5A through 5C are diagrams illustrating an operation of the display unit which is convexly bent along with the screen according to an embodiment of the present invention;
FIGS. 6A through 6F are diagrams illustrating an operation of the display unit which is concavely bent along with the screen according to another embodiment of the present invention;
FIGS. 7A through 7D are diagrams illustrating an operation of the display unit which is convexly bent along with the screen according to another embodiment of the present invention;
FIGS. 8A through 8C are diagrams illustrating a screen mode which is changed according to a bending direction of the display unit according to an embodiment of the present invention; and
FIG. 9 is a flowchart illustrating a method of changing a screen mode of a display apparatus including a display unit which is bendable by an external pressure according to an embodiment of the present invention.

### Best Mode for Carrying out the Invention

-

### Mode for the Invention

Hereinafter, the present invention will be described in greater detail with reference to the accompanying drawings, in which aspects of the present invention are illustrated. In the following description, same drawing reference numerals are used for the same elements throughout the drawings. Well-known functions or constructions may be omitted to avoid obscuring the description with unnecessary detail.

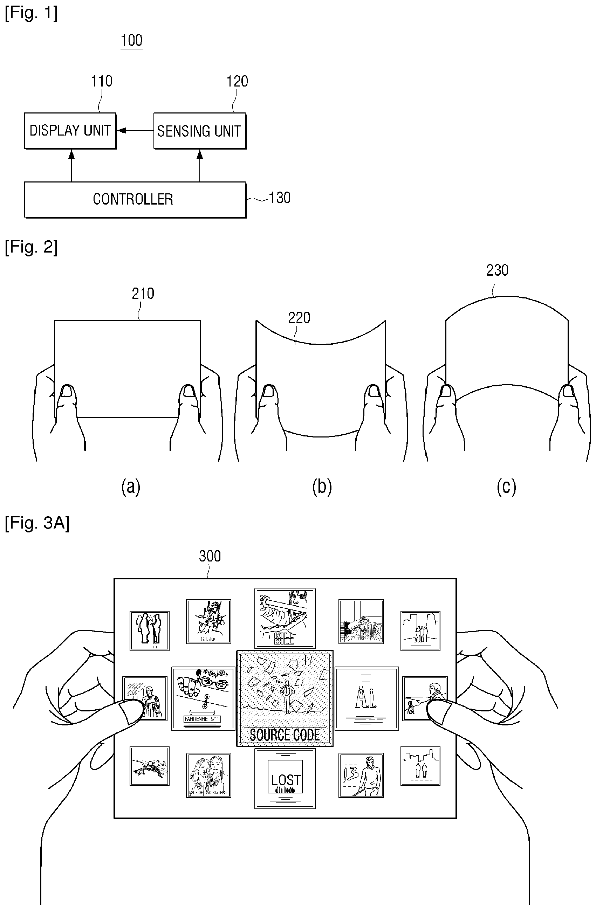

FIG. 1 is a block diagram illustrating a structure of a display apparatus 100 according to an embodiment of the present invention. Referring to FIG. 1, the display apparatus 100 includes a display unit 110, a sensing unit 120, and a controller 130.

The display apparatus 100 of FIG. 1 may be implemented as various types of apparatuses which are portable and have display functions like a mobile phone, a smart phone, a Portable Multimedia Player (PMP), a Personal Digital Assistant (PDA), a tablet Personal Computer (PC), a navigation system, etc. The display apparatus 100 may also be formed into a single body along with the display unit 110 to be bent by external pressure or may additionally include the display unit 110 which is bendable by external pressure.

As the display unit 110 is bendable by the external pressure, for this purpose, in the present embodiment, the display unit 110 may be implemented as a flexible display.

The flexible display refers to a display which is folded, bent, or rolled like a scroll according to an external pressure unlike a general flat panel display and may be implemented as a Flexible Liquid Crystal Display (FLCD), a Flexible Organic Light-Emitting Diode (FOLED), or the like.

The sensing unit 120 is installed in the display unit 110 to sense a bending direction of the display unit 110. The sensing unit 120 may also sense a bending degree of the display unit 110. The sensing unit 120 may include at least one of band sensors, motion sensors, pressure sensors, and tilt sensors.

The band sensors are positioned at regular intervals in horizontal and vertical directions on a back surface of the display unit 110 to sense tension applied to the back surface of the display unit 110. When the display unit 110 is bent, the strength of tension affecting the band sensors varies depending on the bending areas. That is, if the display unit 110 is bent in the horizontal direction, the strength of the tension does not affect the band sensors in the vertical direction. If the display unit 110 is bent in the vertical direction, the strength of the tension does not affect the band sensors in the horizontal direction.

Therefore, through the band sensors, the sensing unit 120 may sense a bending area of the display unit 110 based on a center line of an area receiving the most tension and may sense a bending direction and a bending degree (or angle) of the display unit 110 according to variations in the strength of the tension sensed outwards based on the center line.

The motion sensors are sensors which can measure motion and acceleration when the motion is generated and may be installed within a boundary area of the display unit 110. If the display unit 110 is bent, the sensing unit 120 may determine the bending area, the bending direction, and the bending degree (or angle) of the display unit 110 based on directions of the accelerations sensed by the motion sensors and differences among the accelerations.

The pressure sensors are positioned at regular intervals on the back surface of the display unit 110 to sense pressure applied to the back surface of the display unit 110. If the display unit 110 is bent, the sensing unit 120 senses the bending area, the bending direction, and the bending degree of the display unit 110 by using differences among the pressures received by the pressure sensors.

For example, if the display unit 110 is bent, the bended area receives more pressure than the other areas. Therefore, the sensing unit 120 may sense the bending area and the bending degree of the display unit 110 by using variations in the pressure based on an area receiving the most pressure.

The sensing unit 120 also senses the bending direction of the display unit 110 by using the pressure sensors installed around the boundary of the display unit 110. For example, if a user bends the display unit 110 with thumbs and index fingers, the sensing unit 120 may sense the bending direction of the display unit 110 according to whether pressure sensed by the thumbs is greater or pressure sensed by the index fingers is greater. That is, if the display unit 110 is concavely bent along with a screen, pressure of the thumbs pushing a front surface of the display unit 110 appears higher. If the display unit 110 is convexly bent along with the screen, pressure of the index fingers pushing the back surface of the display unit 110 appears higher. Therefore, the sensing unit 120 senses the bending direction of the display unit 110 according to differences in the pressures.

The tilt sensors are sensors which can sense tilts based on gravity and are positioned at regular intervals on the back surface of the display unit 110. The sensing unit 120 senses the bending area, the bending direction, and the bending degree of the display unit 110 by using variations in the tilts sensed by the tilt sensors.

If the display unit 110 is bent, the sensing unit 120 connects points having tilts of 0 to one another to sense the bending area. The display unit 110 has opposite tilt values when being bent concavely along with the screen and when being bent convexly. Therefore, the sensing unit 120 senses the bending direction of the display unit 110 according to the variations in the tilts.

As described above, the sensing unit 120 senses the bending area, the bending direction, and the bending degree of the display unit 110 by using various types of sensors. The sensing unit 120 may also transmit sensing results to the controller 130, as described below.

The sensing unit 120 may also sense at least one of an incline degree and an incline direction of the display unit 110. For this purpose, the sensing unit 120 includes biaxial or triaxial acceleration sensors and triaxial gyro sensors to transmit the sensing results to the controller 130.

The sensing unit 120 may sense a touch input of the user. The sensing unit 120 recognizes touches input from fingers of the user or a stylus pen by using touch sensors positioned on the front surface of the display unit 110 and transmits input touch information to the controller 130.

Here, touch information includes information about types of touches such as taps, drags, flicks, and the like, and information about areas in which corresponding touches are generated.

The taps correspond to motions of the user for cancelling touches without movements of touch positions after the user inputs touches onto a touch panel. The drags corresponding to motions of the user for moving touch positions at a speed lower than a preset threshold speed after the user inputs touches onto the touch panel. The flicks correspond to motions of the user for moving touch positions at a speed greater than a preset threshold speed and then cancelling touches after the user inputs the touches onto the touch panel.

The controller 130 controls an overall operation of the display apparatus 100. Specifically, the controller 130 may change a screen mode of an object displayed on the display unit 110 according to the sensing results of the sensing unit 120.

Here, the object refers to an icon, a picture, contents, an image, a text, a widjet area, or the like which is displayable on the screen.

The screen mode includes a mode (i.e., a search mode) for searching for another object related to the object displayed on the screen of the display unit 110 and a mode for displaying additional information of the object (i.e., a detailed view mode).

That is, the controller 130 determines whether the display unit 110 is concavely or convexly bent along with the screen, based on information about the bending area, the bending direction, and the bending angle of the display unit 110, wherein the information is transmitted from the sensing unit 120, and changes the screen mode of the object displayed on the display unit 110 according to the determination result.

If the display unit 110 is concavely bent along with the screen, the controller 130 may move an object, which has been displayed on the screen, toward a bending axis depending on the external pressure. If the display unit 10 is convexly bent, the controller 130 may display additional information related to the object which has been displayed on the screen.

In the above-described embodiment, the concave or convex bending of the display unit 110 may indicate that left and right sides of the display unit 110 are symmetrically bent based on an axis parallel with the display unit 110. However, the present invention is not limited thereto, and the right side may be more bent than the left side or the left side may be more bent than the right side. Therefore, the left and right sides may be asymmetrically bent.

FIGS. 2(a) through 2(c) are diagrams illustrating a display unit which is bent by an external pressure according to an embodiment of the present invention.

Specifically, FIG. 2(a) illustrates a display unit 210 which is not bent, FIG. 2(b) illustrate a display unit 220 which is concavely bent along with a screen, and FIG. 2(c) illustrates a display unit 230 which is convexly bent on the screen.

If the display unit 220 is concavely bent on the screen or the display unit 230 is convexly bent on the screen as described above, the sensing unit 120 of FIG. 1 transmits information about a bending area, a bending direction, and a bending degree of the display unit 220 or 230 to the controller 130 of FIG. 1. The controller 130 of FIG. 1 changes a screen mode of an object based on the information transmitted from the sensing unit 120 of FIG. 1.

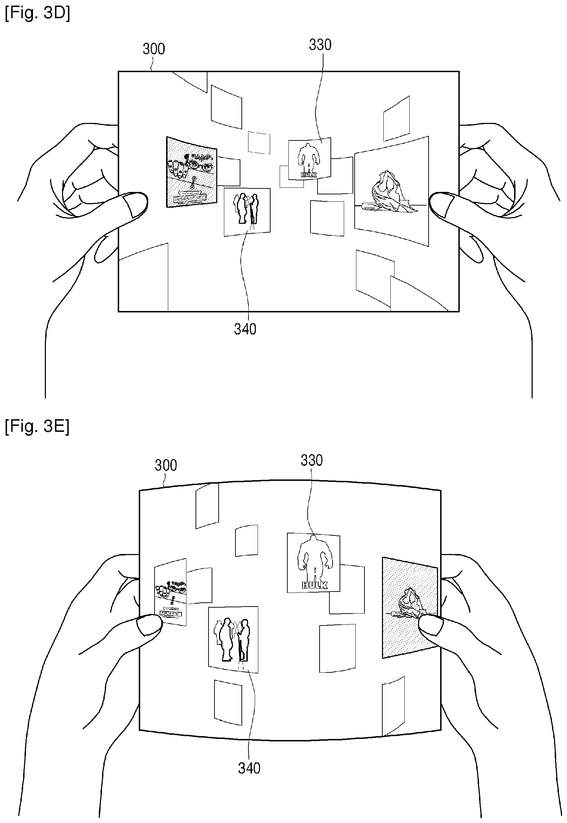

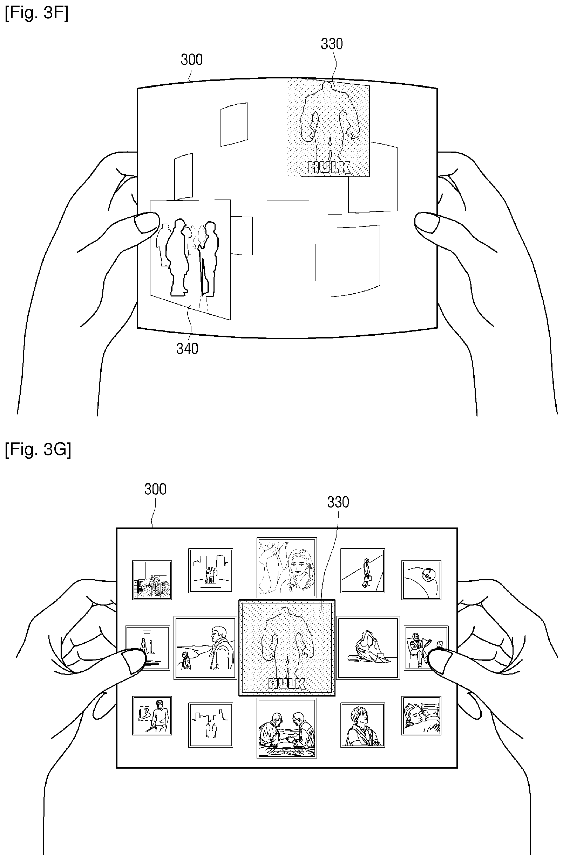

An operation of the display unit 110 which is concavely bent along with the screen according to an embodiment of the present invention will now be described with reference to FIGS. 1 and 3A through 3G.

If the display unit 110 is concavely bent along with the screen, the controller 130 may move an object, which has been displayed on the screen, toward a bending axis depending on the external pressure. Here, the bending axis may refer to a central axis of a concavely bending area of the display unit 110.

The controller 130 may rearrange and display positions of a plurality of objects, which have been displayed on the screen, and move the rearranged objects from an edge of the screen toward the bending axis.

The controller 130 may adjust at least one of a display form and a display size of an object displayed on the screen according to a distance from the bending axis to display a different perspective of an object which is moved toward the bending axis.

That is, the controller 130 adjusts a display form of an object in consideration of a position of the object displayed on a concavely bending screen and adjust a size of the object in proportion to a distance from the bending axis to 3-dimensionally display an object which is moved toward the bending axis so that the object corresponds to a concavely bending shape. FIGS. 3A through 3G will be referred to for the more detailed descriptions.

If the display unit 110 is not bent as illustrated in FIG. 3A, the controller 130 may display thumbnail images of a plurality of movie contents on a screen 300. Here, each of the thumbnail images may be a poster of movie contents or a scene constituting movie contents.

The controller 130 may largely display objects adjacent to a center of the screen 300 and may display a Graphical User Interface (GUI) for selecting an object positioned in the center of the screen 300. Although the GUI is highlighted in the present embodiment, this is only an example. The GUI may be implemented as a form such as a cursor or the like, and a position of the GUI may be changed according to a touch input of the user.

If the display unit 110 is concavely bent along with the screen 300 by the user, the controller 130 may rearrange the thumbnail images displayed on the screen 300 and move and display the rearranged thumbnail images toward a bending axis. The controller 130 may adjust display forms and sizes of the thumbnail images according to the rearranged positions of the thumbnail images and distances of the thumbnail images from the bending axis.

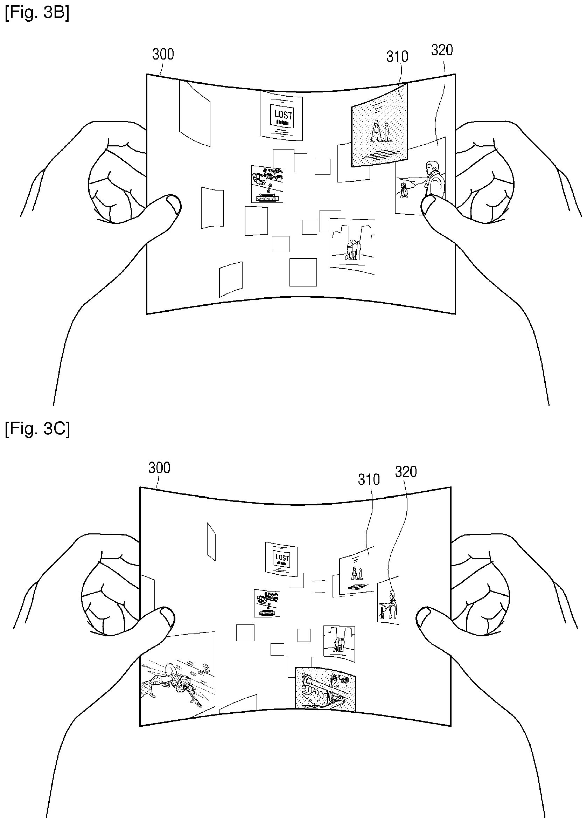

For example, the controller 130 may adjust the display forms of the thumbnail images arranged on right and left sides based on the bending axis on the screen 300 so that the thumbnail images incline toward the bending axis. That is, as illustrated in FIG. 3B, thumbnail images 310 and 320 arranged on the right (or left) side based on the bending axis may have trapezoidal shapes, so that lengths of edges of the thumbnail images 310 and 320 close to the bending axis are shorter than lengths of edges of the thumbnail images 310 and 320 distant from the bending axis.

As illustrated in FIGS. 3B and 3C, as the thumbnail images 310 and 320 arranged on the right (or left) side based on the bending axis are moved toward the bending axis, sizes of the thumbnail images 310 and 320 may be adjusted and displayed to be smaller.

Also, if the display unit 110 is continuously concavely bent along with the screen 300, new thumbnail images 330 and 340 which have not been displayed on the screen 300 may be displayed as illustrated in FIG. 3D.

The new thumbnail image 330 may be moved and displayed from a right edge of the screen 300 toward the bending axis and may be displayed to be gradually smaller in size when moving toward the bending axis. Also, the new thumbnail image 340 may be moved and displayed from a left edge of the screen 300 toward the bending axis and may be displayed to be gradually smaller in size when moving toward the bending axis.

If the display unit 110 which has been concavely bent is convexly bent along with the screen 300, the controller 130 may move an object, which is moved toward the bending axis, to an edge of the screen 300.

The controller 130 may adjust at least one of a display form and a size of an object displayed on the screen 300 according to a changed distance from the bending axis according to an external pressure in order to display a different perspective of an object which is moved to the edge of the screen 300. Here, the changed bending axis may refer to a central axis of a convexly bending area of the display unit 110.

That is, if the display unit 110 which has been concavely bent is convexly bent along with the screen 300, the thumbnail image 330, which is being moved toward the bending axis, may be moved and displayed from the changed bending axis to a right edge of the screen 300. In order to display a different perspective of the thumbnail image 330, as the thumbnail image 330 moves closer to the right edge of the screen 300, i.e., and distances from the bending axis, the thumbnail image 330 may be displayed to be gradually larger. Also, the thumbnail image 340 may be moved and displayed from the changed bending axis to a left edge of the screen 300. As the thumbnail image 340 is displayed closer to the left edge of the screen 300, i.e., is distanced from the bending axis, the thumbnail image 340 is displayed to be gradually larger.

That is, the controller 130 may adjust a display form and a size of an object, which is displayed on the screen, in proportion to the distance from the bending axis in consideration of a position in which a thumbnail image which is moved is displayed, in order to 3-dimensionally display an object, which is displayed to be distant from the bending axis, so that the object corresponds to a convexly bending shape.

Similarly, if the display unit 110 remains convexly bent along with the screen 300, a new thumbnail image which has not been displayed on the screen 300 may be displayed. However, the new thumbnail image may be moved and displayed from the bending axis to the edge of the screen 300 and may be displayed to be gradually larger when moving toward the edge of the screen 300.

The controller 130 may increase or decrease a moving speed of an object, which is being moved, according to the bending degree of the display unit 10.

As the bending degree of the display unit 110 transmitted from the sensing unit 120 is great, the controller 130 may increase a moving speed of an object which is moving in the bending direction or to the edge of the screen. As the bending degree of the display unit 110 increases or decreases, the controller 130 may increase or decrease the moving speed of the object which is moving in the bending direction or to the edge of the screen. That is, the controller 130 may change a moving speed of an object in proportion to the bending degree of the display unit 110 transmitted from the sensing unit 120.

The controller 130 may also display a GUI for selecting an object which is displayed with being moved on the screen. Here, a position of the GUI may be fixed or may be arbitrarily changed with time.

For example, the GUI may be displayed to overlap with an object which is displayed to be closest to the bending axis or may be displayed to overlap with an object which is displayed to be largest on the screen. The position of the GUI may also be changed with time regardless of a position and a size of an object displayed on the screen, and the GUI may be displayed to overlap with the object.

The controller 130 may move and display the object, which has overlapped with the GUI, to the center of the screen at a time when the display unit 110 which has been concavely or convexly bent returns to its original state. The controller 130 may display objects, which are adjacent to an object displayed in the center of the screen, in consideration of arrangement states among objects which have been displayed on the screen before the display unit 110 is bent. However, this is only an example, and an arbitrary object may be displayed around an object displayed in the center of the screen.

That is, as illustrated in FIGS. 3B through 3G, a highlight is displayed to select one of thumbnail images which are displayed with being moved on the screen 300. Also, the thumbnail image 330 which has been highlighted is positioned and displayed in the center of the screen 300 at a time when the display unit 110 which has been bent returns to its original state. A thumbnail image, which has been displayed on left and right sides of and above and under the thumbnail image 330 which has not been moved, may be displayed on left and right sides of and above and under the thumbnail image 330 which has been moved to the center of the screen 300.

If the display unit 10 is concavely bent or the display unit 110 which has been concavely bent is convexly bent, the controller 130 may display a different perspective of an object, which is moved on the screen, as described above.

For this purpose, the controller 130 may include a 3-Dimensional (3D) engine to model an object by using a 3D coordinate system, project the 3D image onto a 2-Dimensional (2D) plane, and render a color and light and shade to a generated 3D shape. Here, the rendering process is a process of adding a 3D effect, such as a shadow or a color change, to a graphic in order to add a realistic feeling to the graphic and may include a removal of a hidden surface, shading, texture mapping, etc.

As described above, the controller 130 may include the 3D engine to calculate a display form of each object by using the 3D coordinate system in order to display each object as a 3D coordinate having perspective on the display unit 110.

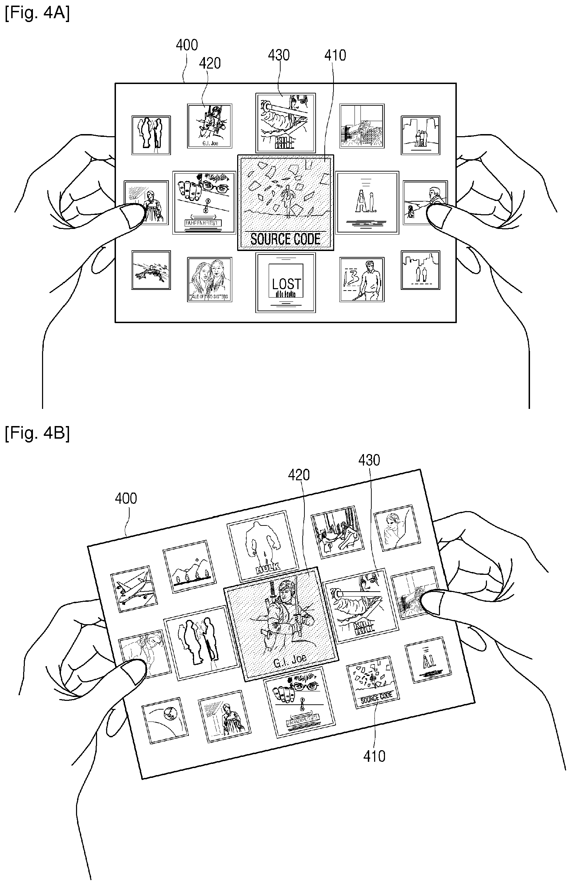

An operation of the display unit 110 which is not bent according to an embodiment of the present invention will now be described with reference to FIGS. 1 and 4A through 4C.

The controller 130 may move and display an object, which is positioned on the screen in a direction in which the display unit 110 is inclined, to the center of the screen. If a plurality of objects are displayed on the screen, and the display unit 110 is inclined in one direction of the screen, the controller 130 may move and display an object existing in the one direction to the center of the screen and move and display an object displayed in the center of the screen in another direction. This will now be described in more detail with reference to FIGS. 4A through 4C.

As illustrated in FIG. 4A, the controller 130 may display thumbnail images of a plurality of movie contents on a screen 400, as described in detail with reference to FIG. 3A.

If the display unit 110 is inclined to a left top of the screen 400 by the user, as illustrated in FIG. 4B, a thumbnail image 410 displayed in a center of the screen 400 is moved to a right bottom of the screen 400, and a thumbnail image 420 displayed on a left top of the thumbnail image 410 is moved to the center of the screen 400.

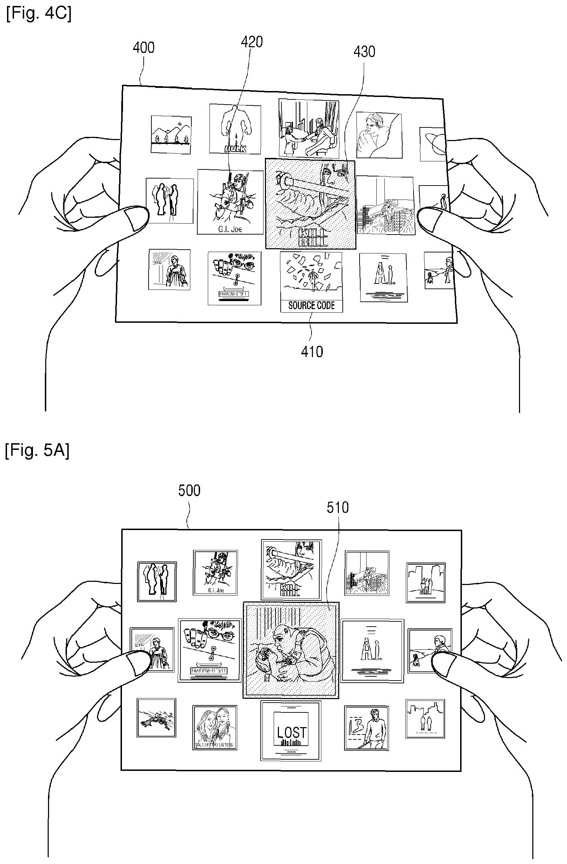

If the display unit 110 is inclined to the right side of the screen 400, as illustrated in FIG. 4C, the thumbnail image 420 displayed in the center of the screen 400 is moved to the left side of the screen 400, and a thumbnail image 430 displayed on the right side of the thumbnail image 420 is moved to the center of the screen 400.

In the above-described embodiment, the controller 130 adjusts a moving speed of an object, which is moved and displayed to the center of the screen, in consideration of an incline degree of the display unit 110. As an incline degree of the display unit 110 in one direction is great, the controller 130 may increase a moving speed to move and display an object displayed in the one direction to the center of the screen.

An operation of the display unit 110 which is convexly bent along with the screen according to an embodiment of the present invention will now be described with reference to FIG. 1 and 5A through 5C.

If the display unit 110 is convexly bent along with the screen, the controller 130 may display additional information related to an object displayed on the screen. Here, the additional information may include at least one of a preview and detailed information of the object displayed on the screen.

If the display unit 110 is not bent as illustrated in FIG. 5A, the controller 130 may display thumbnail images of a plurality of movie contents on a screen 500, as described with reference to FIG. 3A.

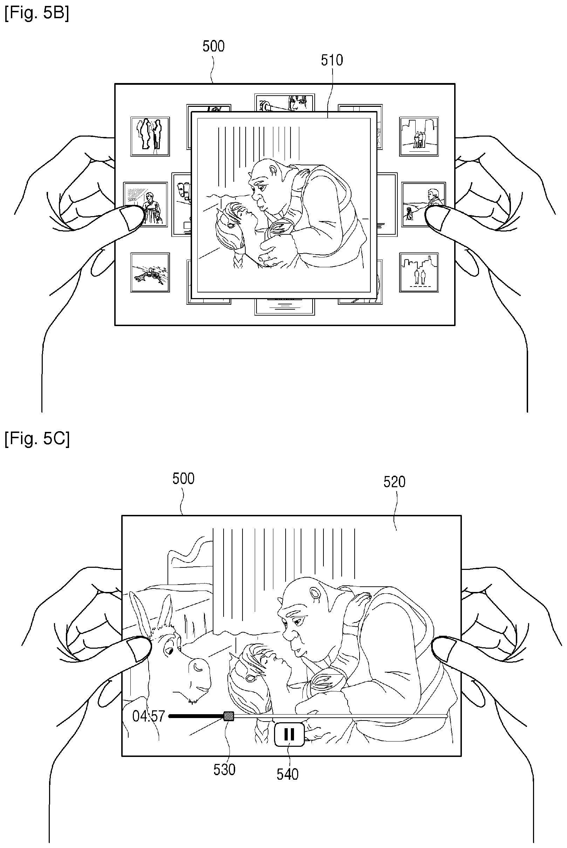

If the display unit 110 is convexly bent by the user, a thumbnail image 510 which is highlighted is enlarged and displayed on the screen 500 as illustrated in FIG. 5B, and a preview 520 of the thumbnail image 510 is sequentially executed as illustrated in FIG. 5C.

The thumbnail image 510 which is highlighted is enlarged and displayed at a time when the display unit 110 is convexly bent. If the display unit 110 which has been convexly bent returns to its original state, the preview 520 of the highlighted thumbnail image 510 may be executed. A time bar 530 for indicating playing time of content which are being played and an icon 540 for pausing the contents which are being played may be displayed together.

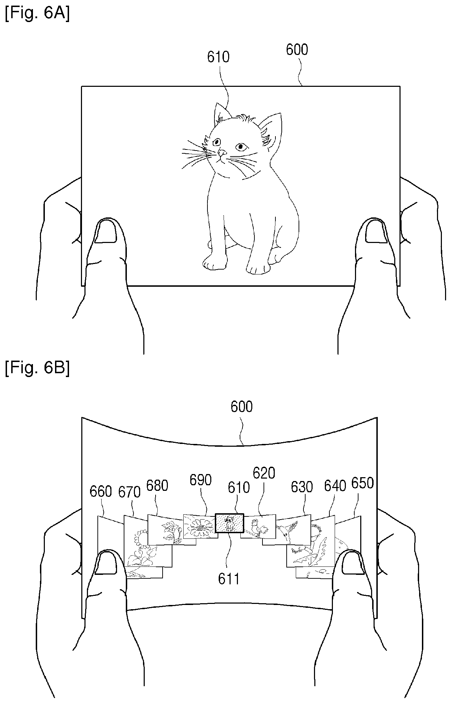

FIGS. 6A through 6F are diagrams illustrating a display unit which is concavely bent along with a screen according to another embodiment of the present invention. Hereinafter, FIG. 1 will be referred to in order to illustrate the display unit which is concavely bent along with the screen.

If the display unit 110 is concavely bent along with the screen, the controller 130 adjusts at least one of a position and a size of an object displayed on the screen to display the adjusted object on the screen along with a new object.

The controller 130 may sequentially display the object displayed on the screen and the new object side by side in a horizontal or vertical direction. Alternatively, the controller 130 may display the object and the new object in a zigzag form on the screen.

The controller 130 may display in perspective a plurality of objects on the screen according to their positions on the screen of the display unit 110 which is concavely bent and may sequentially move the plurality of objects. The plurality of objects may move in a virtually closed loop, wherein objects, which are sequentially moving to positions of adjacent next objects, may return to their original positions in the same manner.

That is, if the display unit 110 is concavely bent on a screen 600 as illustrated in FIGS. 6A and 6B, a picture image 610 displayed on the screen 600 is reduced in size and then is displayed in a center of the screen 600. New picture images 620 through 690 are sequentially displayed side by side in a horizontal direction along with the picture image 610. Here, sizes and display forms of the new picture images 620 through 690 may be adjusted and displayed in proportion to their distances from the picture image 610.

Therefore, various perspectives are displayed among the picture images 610 through 690, and thus the picture image 610 displayed in the most concavely bent area is visualized as most distantly positioned to the user. The picture images 620 through 690, variously distant from the most concavely bending area, are visualized as being positioned closer, by the user, providing a 3D user experience, corresponding to a concavely bending shape.

As illustrated in FIGS. 6B through 6E, the picture images 610 through 690 may be moved and displayed to positions of adjacent picture images based on the moving direction.

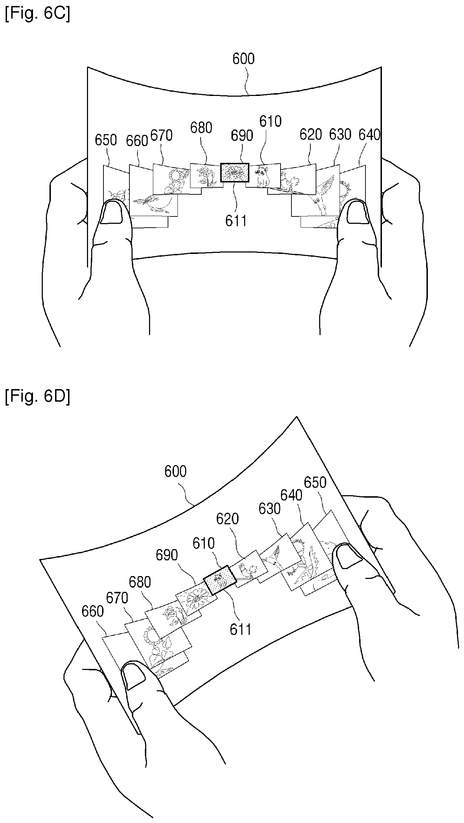

That is, as illustrated in FIGS. 6B and 6C, the controller 130 may move the picture image 610 of the plurality of picture images, which are sequentially displayed side by side in the horizontal direction on the screen, to a position of the picture image 620 which is adjacent on the right side of the picture image 610. Also, the controller 130 may move and display the picture image 690, which is adjacent on the left side of the picture image 610, to a position of the picture image 610.

The controller 130 may change at least one of moving directions and moving speeds of a plurality of objects displayed on the screen, according to an incline degree and an incline direction of the display unit 110.

The controller 130 compares the moving directions of the plurality of objects displayed on the screen with the incline direction of the display unit 110 transmitted from the sensing unit 120 in order to determine whether the moving directions of the plurality of objects displayed on the screen correspond to the incline direction of the display unit 110.

If it is determined that the moving directions of the plurality of objects displayed on the screen correspond to the incline direction of the display unit 110, the controller 130 may increase the moving speeds of the plurality of objects displayed on the screen.

The controller 130 may consider the incline degree of the display unit 110 transmitted from the sensing unit 120 in order to change the moving speeds of the plurality of objects.

That is, if the moving directions of the plurality of objects displayed on the screen correspond to the incline direction of the display unit 110, the controller 130 may further quickly increase the moving speeds of the plurality of objects displayed on the screen with an increase in the incline degree of the display unit 110.

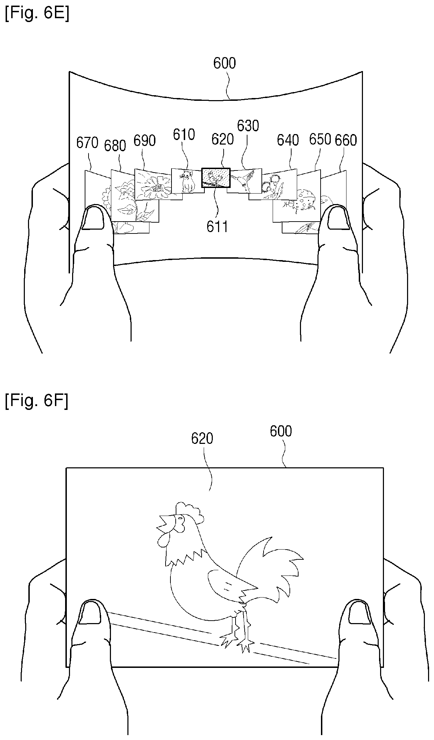

If it is determined that the moving directions of the plurality of objects displayed on the screen are opposite to the incline direction of the display unit 110, the controller 130 may change the moving directions of the plurality of objects displayed on the screen to directions opposite to directions in which the plurality of objects having been moved. For example, if the display unit 110 is inclined in a left direction opposite to the moving directions of the plurality of picture images 610 through 690 as illustrated in FIGS. 6D and 6E, the plurality of picture images 610 through 690 may be moved and displayed to the left.

The controller 130 may also display a GUI for selecting one of objects displayed on the screen. Here, the GUI may be a graphic for selecting an object displayed on the screen, such as a cursor, a highlight, or the like. For example, as illustrated in FIGS. 6B through 6E, the controller 130 may display a highlight 611 so that the highlight 611 overlaps with a picture image, in order to select one picture image.

Also, the controller 130 may select an object overlapping with the GUI at a time when the display unit 110 which has been concavely bent along with the screen returns to its original state.

As described above, if the display unit 110 is concavely bent along with the screen, the controller 130 sequentially moves and displays a plurality of objects displayed on the screen to positions of adjacent next objects according to moving directions of the plurality of objects. The plurality of objects form a virtual closed loop, and thus objects, which are sequentially moved to positions of adjacent next objects, return to their original positions.

Therefore, the controller 130 may fixedly display a GUI for selecting a particular object in a position of one of a plurality of objects, which are moving on the screen, to select one of objects, which are sequentially moved, at a time when the display unit 110 which has been concavely bent returns to its original state in which the display unit 110 is not bent. Specifically, the GUI may overlap with an object which is displayed to be smallest.

For example, if the display unit 110 which has been concavely bent along with the screen 600 returns to its original state as illustrated in FIGS. 6E and 6F, the picture image 620 overlapping with the highlight 611 may be selected at the returning time of the display unit 110 to be displayed in a full view form on the screen 600.

The controller 130 may adjust at least one of perspectives and moving speeds of a plurality of objects according to the bending degree of the display unit 110. The controller 130 determines the bending degree of the display unit 110 according to intensities of sensing signals transmitted from the band sensors

The controller 130 displays the plurality of objects so that perspective differences among the plurality of objects increase with an increase in the bending degree of the display unit 110. As a concave bending degree of the display unit 110 increases, the controller 130 may adjust an object displayed in a most concavely bending area of the screen so that the object is smaller and increase an increasing rate of a size of the object according to a distance from the most concavely bending area. Therefore, the controller 130 may increase the perspective differences among the objects displayed on the screen with the increase in the bending degree of the display unit 110.

The controller 130 may also increase moving speeds of a plurality of objects with the increase in the bending degree of the display unit 110. As will be described later, this is to fast search for an object in a search mode for searching for another object related to the object (i.e., if the display unit 110 is concavely bent along with the screen).

In FIGS. 6A through 6F, one object is displayed on a screen, but this is only an example. That is, if a plurality of objects are displayed as illustrated in FIG. 3A, and the display unit 110 is concavely bent along with the screen, the plurality of objects may be implemented as illustrated in FIGS. 6A through 6F.

Similarly, a plurality of objects is displayed on a screen in FIGS. 3A through 3F, as one example. However, even if one object is displayed as illustrated in FIG. 6A, the object may be implemented as illustrated in FIGS. 3A through 3G.

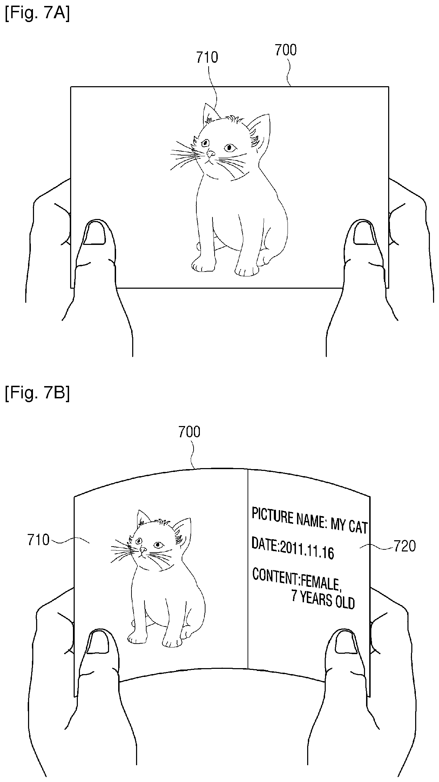

FIGS. 7A through 7D are diagrams illustrating a display unit which is convexly bent along with a screen according to another embodiment of the present invention. Hereinafter, FIG. 1 will be also referred to in order to illustrate the display unit which is convexly bent along with the screen.

Specifically, FIGS. 7A through 7D illustrate a picture image which is displayed in a full view form on a screen. That is, if the display unit 110 is not bent as illustrated in FIG. 7A, a picture image 710 is displayed in a full view form on a screen 700 of the display unit 110.

If the display unit 110 is convexly bent along with the screen 700, detailed information of the picture image 710, which has been displayed on the screen 700, is displayed. That is, as show in FIG. 7B, a size of the picture image 710 may be adjusted and displayed in an area of the screen 700, and detailed information 720 of the picture image 710 including "Picture Name," "Date," and "Contents" may be displayed in an other area of the screen 700. Here, the detailed information 720 of the picture image 710 may be pre-stored in a storage unit (not shown) installed in the display apparatus 100 by the user.

If the display unit 110 which has been convexly bent returns to its original state, the picture image 710 may be displayed along with the detailed information 720 until an additional user command is input. However, if the display unit 110 is concavely bent along with the screen 700 according to a manipulation of the user, the picture image 710 may be displayed in the full view form as illustrated in FIG. 7A.

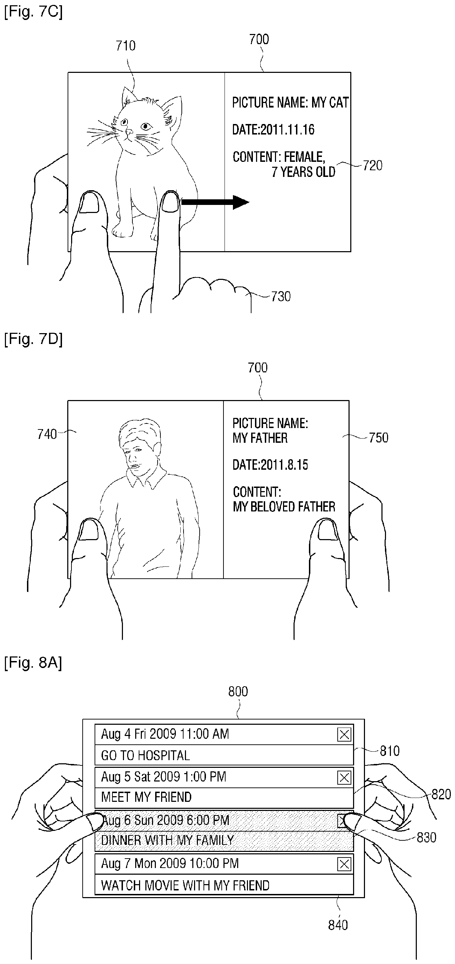

If a touch input of the user is sensed, the controller 130 may display additional information related to an object displayed on the screen and another object. For example, as illustrated in FIGS. 7C and 7D, if a flick command 730 is input to the right, the picture image 710 and the detailed information 720, which are currently displayed on the screen 700 of the display unit 110, may be respectively changed to a new picture image 740 and detailed information 750 of the new picture image 740.

In the above-described embodiment, another picture image and detailed information are displayed according to a right side flick command. However, even if a left side flick command is sensed or incline of a display unit is sensed, a new picture image and detailed information thereof may be displayed.

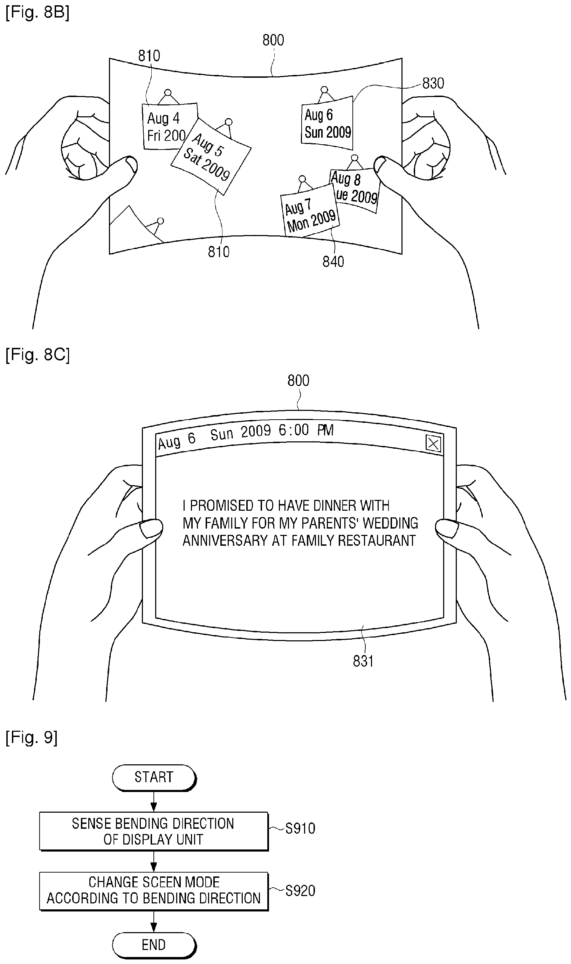

FIGS. 8A through 8C are diagrams illustrating a screen mode which is changed according to a bending direction of a display unit, according to another embodiment of the present invention. Specifically, FIGS. 8A and 8C are diagrams illustrating a display unit which is concavely or convexly bent along with a screen on memo pad contents.

As illustrated in FIG. 8A, memo pads are listed on a screen 800 of the display unit 110. Here, times and names of memos may be displayed together in each list.

If the display unit 110 is concavely bent along with the screen 800, the controller 130 may form memos included in a list into images and display the images of the memos on the screen 800 as illustrated in FIG. 8B. As described with reference to FIGS. 3A through 3F, the images of the memos may be moved toward a bending axis and then may be displayed to have different perspectives, as described above with reference to FIGS. 3A through 3F.

However, as described with reference to FIGS. 6A through 6F, the images of the memos may be arranged side by side in a horizontal direction to have different perspectives and may be displayed with being sequentially moved, as described above with reference to FIGS. 6A through 6F.

If the display unit 110 is convexly bent along with the screen 800, the controller 130 may display detailed information 831 of a memo 830, which has been highlighted, as illustrated in FIG. 8C. However, this has been described above with reference to FIGS. 5A through 5C and 7A through 7C, and thus detailed descriptions will be omitted herein.

FIG. 9 is a flowchart illustrating a method of changing a screen mode of a display apparatus including a display unit which is bendable by an external pressure, according to an embodiment of the present invention.

Referring to FIG. 9, in Step 910, a bending direction of the display unit is sensed. According to the bending direction of the display unit, concavely bending or convexly bending of the display unit may be sensed.

In Step 920, a screen mode of an object displayed on the display unit is changed according to the bending direction.

If the display unit is concavely bent along with the screen, an object, which has been displayed on the screen, may be moved toward a bending axis depending on an external pressure. Here, at least one of a display form and a size of an object displayed on the screen may be adjusted based on a distance from the bending axis to display a different perspective of an object which is moved toward the bending axis. Also, a GUI for selecting one of a plurality of objects displayed on the screen may be displayed, and an object, which has overlapped with the GUI, may be moved and displayed at a time when the display unit which has been concavely bent along with the screen returns to its original state.

If the display unit which has been concavely bent is convexly bent along with the screen, an object, which is move toward the bending axis, may be moved to an edge of the screen. Even At least one of a display form and a size of an object displayed on the screen may be adjusted according to a distance from the bending axis changed according to an external pressure in order to display a different perspective of an object which is moved to the edge of the screen.

As described above, a bending degree of the display unit may be sensed, and a moving speed of an object which is moving may be increased or decreased according to the bending degree of the display unit. If the display unit is convexly bent along with the screen, additional information related to an object, which has been displayed on the screen, may be displayed. Additional information may include at least one of a preview and detailed information of the object which has been displayed on the screen.

Further, an incline direction of the display unit may be sensed and an object positioned in a direction in which the display unit is inclined may be moved and displayed in a center of the screen.

A program for executing the method according to an embodiment of the present invention, as described above, may be stored and implemented on various types of recording media. That is, a code for executing the above-described methods may be stored on various types of computer-readable recording media such as a Random Access Memory (RAM), a flash memory, a Read Only Memory (ROM), an Erasable Programmable ROM (EPROM), an Electronically Erasable and Programmable ROM (EEPROM), a register, a hard disk, a removable disk, a memory card, a Universal Serial Bus (USB) memory, a CD-ROM, and the like.

While the present invention has been shown and described with reference to various embodiments thereof, the invention is defined by the appended claims.

## Claims

1. A display apparatus (100) comprising:
a display unit (110) which is bendable by external pressure;
a sensing unit (120) installed in the display unit (110) and configured to sense a bending direction of the display unit (110); and
a controller (130) configured to display a plurality of objects (610-690) on a screen of the display unit (110);
change a screen mode of an object displayed on a screen of the display unit (110) according to the bending direction, and
if the display unit (110) is concavely bent with respect to the front surface of the display unit, sequentially move the plurality of objects toward a bending axis depending on the external pressure, the plurality of objects forming a virtual closed loop, and thus objects, which are sequentially moved to positions of adjacent next objects, return to their original positions;
and wherein the controller is further configured to fixedly display on the bending axis a Graphical User Interface, GUI (611), for selecting one of the plurality of objects being moved toward the bending axis, select an object overlapping with the GUI (611) at a time when the display unit (110) which has been concavely bent with respect to the front surface of the display unit returns to its original state, and move and display the selected object to a center of the screen.

2. The display apparatus (100) of claim 1, wherein the controller is configured to adjust at least one of a display form and a size of the object displayed on the screen according to a distance from the bending axis in order to display a different perspective of an object which is moved toward the bending axis.

3. The display apparatus (100) of claim 1, wherein if the display unit (110) which has been concavely bent is convexly bent with respect to the front surface of the display unit, the controller is configured to move an object, which is moved toward the bending axis, to an edge of the screen.

4. The display apparatus (100) of claim 3, wherein the controller is configured to adjust at least one of a display form and a size of the object displayed on the screen according to a changed distance from the bending axis according to an external pressure in order to display a different perspective of an object which is moved to the edge of the screen.

5. The display apparatus (100) of claim 1, wherein the sensing unit (120) is further configured to sense a bending degree of the display unit (110), and
wherein the controller is configured to change a moving speed of the object, according to the bending degree of the display unit (110).

6. The display apparatus (100) of claim 1, wherein the sensing unit (120) is further configured to sense an incline direction of the display unit (110) subsequent to the concave bending, and
wherein the controller is configured to move the plurality of objects in a direction according to the incline direction of the display unit.

7. The display apparatus (100) of claim 1, wherein if the display unit (110) is convexly bent with respect to the front surface of the display unit, the controller is configured to display additional information related to an object which has been displayed on the screen.

8. The display apparatus (100) of claim 7, wherein the additional information comprises at least one of a preview and detailed information of the object which has been displayed on the screen.

9. A method of changing a screen mode of a display apparatus (100) comprising a display unit (110) which is bendable by external pressure, and a sensing unit (120) installed in the display unit (100), the method comprising:
sensing (S910), by the sensing unit (120),
a bending direction of the display unit (110);
displaying a plurality of objects (610-690) on a screen of the display unit (110);
changing (920) a screen mode of an object displayed on a screen of the display unit (110) according to the bending direction, wherein
changing (S910) the screen mode comprises:
if the display unit (110) is concavely bent with respect to the front surface of the display unit, sequentially moving the plurality of objects toward a bending axis depending on the external pressure, the plurality of objects forming a virtual closed loop, and thus objects, which are sequentially moved to positions of adjacent next objects, return to their original positions;
and wherein the method further comprises fixedly displaying on the bending axis a Graphical User Interface, GUI (611), for selecting one of the plurality of objects being moved toward the bending axis;
selecting an object overlapping with the GUI (611) at a time when the display unit (110) which has been concavely bent with respect to the front surface of the display unit returns to its original state; and
moving and displaying the selected object to a center of the screen.

10. The method of claim 9, wherein changing (S910) the screen mode further comprises adjusting at least one of a display form and a size of an object displayed on the screen according to a distance from the bending axis in order to display a different perspective of an object which is moved toward the bending axis.

11. The method of claim 9, wherein changing (S910) the screen mode further comprises, if the display unit (110) which has been concavely bent is convexly bent with respect to the front surface of the display unit, moving an object, which is moved toward the bending axis, to an edge of the screen.

12. The method of claim 11, wherein changing (S910) the screen mode further comprises, adjusting at least one of a display form and a size of an object displayed on the screen according to a changed distance from the bending axis according to an external pressure in order to display a different perspective of an object which is moved to the edge of the screen.

13. A computer readable storage medium having stored thereon computer executable instructions arranged to implement the method of any of claims 9 to 12.

## Patentansprüche

1. Anzeigevorrichtung (100), umfassend:
eine Anzeigeeinheit (110), die durch äußeren Druck biegbar ist;
eine Fühlereinheit (120), die in der Anzeigeeinheit (110) installiert und so gestaltet ist, dass sie eine Biegerichtung der Anzeigeeinheit (110) erfasst; und
eine Steuereinheit (130), die so gestaltet ist, dass sie eine Mehrzahl von Objekten (610-690) auf einem Bildschirm der Anzeigeeinheit (110) anzeigt; einen Bildschirmmodus eines auf einem Bildschirm der Anzeigeeinheit (110) gemäß der Biegerichtung ändert; und, wenn die Anzeigeeinheit (110) konkav gebogen wird im Verhältnis zu der vorderen Oberfläche der Anzeigeeinheit, die Mehrzahl von Objekten in Richtung einer Biegeachse abhängig von dem äußeren Druck sequentiell bewegt, wobei die Mehrzahl von Objekten einen virtuellen geschlossenen Kreis bilden, und somit Objekte, die sequentiell an Positionen benachbarter nächster Objekte bewegt werden, an ihre ursprünglichen Positionen zurückkehren;
und wobei die Steuereinheit ferner zu folgenden Zwecken gestaltet ist:
festes Anzeigen einer grafischen Benutzeroberfläche, GUI, (611) auf der Biegeachse, um eines der Mehrzahl von Objekten auszuwählen, das in Richtung der Biegeachse bewegt wird;
Auswählen eines Objekts, das die GUI (611) zu einem Zeitpunkt überlappt, wenn die Anzeigeeinheit (110), die im Verhältnis zu der vorderen Oberfläche der Anzeigeeinheit konkav gebogen ist, in ihren ursprünglichen Zustand zurückkehrt; und
Bewegen und Anzeigen des ausgewählten Objekts an bzw. in einer Mitte des Bildschirms.

2. Anzeigevorrichtung (100) nach Anspruch 1, wobei die Steuereinheit so gestaltet ist, dass sie mindestens eines einer Anzeigeform oder und einer Größe des auf dem Bildschirm angezeigten Objekts abhängig von der Biegeachse anzeigt, um eine andere Perspektive eines Objekts anzuzeigen, das in Richtung der Biegeachse bewegt wird.

3. Anzeigevorrichtung (100) nach Anspruch 1, wobei, wenn die Anzeigeeinheit (110), die konkav gebogen worden ist, im Verhältnis zu der vorderen Oberfläche der Anzeigeeinheit konvex gebogen wird, die Steuereinheit so gestaltet ist, dass sie ein Objekt, das in Richtung der Biegeachse bewegt wird, zu einem Rand des Bildschirms bewegt.

4. Anzeigevorrichtung (100) nach Anspruch 3, wobei die Steuereinheit so gestaltet ist, dass sie mindestens eines einer Anzeigeform oder und einer Größe des auf dem Bildschirm angezeigten Objekts gemäß einem geänderten Abstand zu der Biegeachse gemäß einem äußeren Druck ändert, um eine andere Perspektive eines Objekts anzuzeigen, das zu dem Rand des Bildschirms bewegt wird.

5. Anzeigevorrichtung (100) nach Anspruch 1, wobei die Fühlereinheit (120) ferner so gestaltet ist, dass sie einen Biegungsgrad der Anzeigeeinheit (110) erfasst, und
wobei die Steuereinheit so gestaltet ist, dass sie eine Bewegungsgeschwindigkeit des Objekts gemäß dem Biegungsgrad der Anzeigeeinheit (110) ändert.

6. Anzeigevorrichtung (100) nach Anspruch 1, wobei die Fühlereinheit (120) ferner so gestaltet ist, dass sie eine Neigungsrichtung der Anzeigeeinheit (110) nach der konkaven Biegung misst, und
wobei die Steuereinheit so gestaltet ist, dass sie die Mehrzahl von Objekten gemäß der Neigungsrichtung der Anzeigeeinheit in eine Richtung bewegt.

7. Anzeigevorrichtung (100) nach Anspruch 1, wobei, wenn die Anzeigeeinheit (110) im Verhältnis zu der vorderen Oberfläche der Anzeigeeinheit konvex gebogen ist, die Steuereinheit so gestaltet ist, dass sie zusätzliche Informationen anzeigt, die im Verhältnis zu einem Objekt stehen, das auf dem Bildschirm angezeigt wird.

8. Anzeigevorrichtung (100) nach Anspruch 7, wobei die zusätzlichen Informationen mindestens eines einer Vorschau und detaillierter Informationen des Objekts umfassen, das auf dem Bildschirm angezeigt wird.

9. Verfahren zum Ändern eines Bildschirmmodus auf einer Anzeigevorrichtung (100), die eine Anzeigeeinheit (110) umfasst, die durch äußeren Druck biegbar ist, und eine Fühlereinheit (120), die in der Anzeigeeinheit (100) installiert ist;
wobei das Verfahren folgendes umfasst:
Erfassen (S910) einer Biegerichtung der Anzeigeeinheit (110) durch die Fühlereinheit (120);
Anzeigen einer Mehrzahl von Objekten (610-690) auf einem Bildschirm der Anzeigeeinheit (110);
Ändern (920) eines Bildschirmmodus eines auf einem Bildschirm der Anzeigeeinheit (110) angezeigten Objekts gemäß der Biegungsrichtung, wobei das Ändern (S910) des Bildschirmmodus folgendes umfasst:
wenn die Anzeigeeinheit (110) konkav gebogen wird im Verhältnis zu der vorderen Oberfläche der Anzeigeeinheit, sequentielles Bewegen der Mehrzahl von Objekten in Richtung einer Biegeachse abhängig von dem äußeren Druck, wobei die Mehrzahl von Objekten einen geschlossenen Kreis bilden, somit Objekte, die sequentiell an Positionen benachbarter nächster Objekte bewegt werden, an ihre ursprünglichen Positionen zurückkehren;
und wobei das Verfahren ferner folgendes umfasst:
festes Anzeigen einer grafischen Benutzeroberfläche, GUI, (611) auf der Biegeachse, um eines der Mehrzahl von Objekten auszuwählen, das in Richtung der Biegeachse bewegt wird;
Auswählen eines Objekts, das die GUI (611) zu einem Zeitpunkt überlappt, wenn die Anzeigeeinheit (110), die im Verhältnis zu der vorderen Oberfläche der Anzeigeeinheit konkav gebogen ist, in ihren ursprünglichen Zustand zurückkehrt; und
Bewegen und Anzeigen des ausgewählten Objekts an bzw. in einer Mitte des Bildschirms.

10. Verfahren nach Anspruch 9, wobei das Ändern (S910) des Bildschirmmodus ferner das Ändern mindestens eines einer Anzeigeform oder und einer Größe eines auf dem Bildschirm angezeigten Objekts gemäß einem Abstand zu der Biegeachse umfasst, um eine andere Perspektive eines Objekts anzuzeigen, das zu der Biegeachse bewegt wird.

11. Verfahren nach Anspruch 9, wobei das Ändern (S910) des Bildschirmmodus ferner folgendes umfasst: wenn die Anzeigeeinheit (110), die konkav gebogen worden ist, im Verhältnis zu der vorderen Oberfläche der Anzeige konvex gebogen wird, Bewegen eines Objekts, das in Richtung der Biegeachse bewegt wird, an einen Rand des Bildschirms.

12. Verfahren nach Anspruch 11, wobei das Ändern (S910) des Bildschirmmodus ferner folgendes umfasst: Anpassen mindestens eines einer Anzeigeform oder und einer Größe eines auf dem Bildschirm angezeigten Objekts gemäß einem geänderten Abstand zu der Biegeachse gemäß einem äußeren Druck, um eine andere Perspektive eines Objekts anzuzeigen, das an den Rand des Bildschirms bewegt wird.

13. Computerlesbares Speichermedium, auf dem mittels Computer ausführbare Anweisungen gespeichert sind, wobei das Medium so angeordnet ist, dass es das Verfahren nach einem der Ansprüche 9 bis 12 implementiert.

## Revendications

1. Appareil d'affichage (100) comprenant :
une unité d'affichage (110) qui peut être pliée par une pression externe ;
une unité de détection (120) installée dans l'unité d'affichage (110) et conçue pour détecter une direction de pliage de l'unité d'affichage (110) ; et
un dispositif de commande (130) conçu pour afficher une pluralité d'objets (610-690) sur un écran de l'unité d'affichage (110) ; modifier un mode écran d'un objet affiché sur un écran de l'unité d'affichage (110) selon la direction de pliage, et
si l'unité d'affichage (110) est pliée de manière concave par rapport à la surface avant de l'unité d'affichage, déplacer séquentiellement la pluralité d'objets vers un axe de pliage en fonction de la pression externe, la pluralité d'objets formant une boucle fermée virtuelle, et ainsi les objets qui sont déplacés séquentiellement vers des positions d'objets suivants adjacents, retournent à leurs positions initiales ; et
le dispositif de commande étant en outre conçu pour afficher de manière fixe sur l'axe de pliage une interface utilisateur graphique, GUI (611), pour sélectionner l'un de la pluralité d'objets déplacés vers l'axe de pliage, sélectionner un objet chevauchant la GUI (611) à un moment où l'unité d'affichage (110) qui a été pliée de manière concave par rapport à la surface avant de l'unité d'affichage revient à son état initial, et déplacer et afficher l'objet sélectionné vers un centre de l'écran.

2. Dispositif d'affichage (100) selon la revendication 1, le dispositif de commande étant conçu pour régler au moins une forme d'affichage et une taille de l'objet affiché sur l'écran en fonction d'une distance à partir de l'axe de pliage afin d'afficher une perspective différente d'un objet qui est déplacé vers l'axe de pliage.

3. Dispositif d'affichage (100) selon la revendication 1, si l'unité d'affichage (110) qui a été pliée de manière concave est pliée de manière convexe par rapport à la surface avant de l'unité d'affichage, le dispositif de commande étant conçu pour déplacer un objet, qui est déplacé vers l'axe de pliage, vers un bord de l'écran.

4. Dispositif d'affichage (100) selon la revendication 3, le dispositif de commande étant conçu pour régler au moins une forme d'affichage et une taille de l'objet affiché sur l'écran en fonction d'une distance modifiée à partir de l'axe de pliage en fonction d'une pression externe afin d'afficher une perspective différente d'un objet qui est déplacé vers le bord de l'écran.

5. Appareil d'affichage (100) selon la revendication 1, l'unité de détection (120) étant en outre conçue pour détecter un degré de pliage de l'unité d'affichage (110), et
le dispositif de commande étant conçu pour modifier une vitesse de déplacement de l'objet, en fonction du degré de pliage de l'unité d'affichage (110).

6. Dispositif d'affichage (100) selon la revendication 1, l'unité de détection (120) étant en outre conçue pour détecter une direction d'inclinaison de l'unité d'affichage (110) après le pliage concave, et
le dispositif de commande étant conçu pour déplacer la pluralité d'objets dans une direction selon la direction d'inclinaison de l'unité d'affichage.

7. Dispositif d'affichage (100) selon la revendication 1, si l'unité d'affichage (110) est pliée de manière convexe par rapport à la surface avant de l'unité d'affichage, le dispositif de commande étant conçu pour afficher des informations supplémentaires relatives à un objet qui a été affiché sur l'écran.

8. Dispositif d'affichage (100) selon la revendication 7, les informations supplémentaires comprenant un aperçu et/ou des informations détaillées de l'objet qui a été affiché sur l'écran.

9. Procédé de modification d'un mode écran d'un appareil d'affichage (100) comprenant une unité d'affichage (110) qui est pliable par une pression externe, et une unité de détection (120) installée dans l'unité d'affichage (100),
le procédé comprenant les étapes :
détection (S910), par l'unité de détection (120), d'une direction de pliage de l'unité d'affichage (110) ;
affichage d'une pluralité d'objets (610-690) sur un écran de l'unité d'affichage (110) ;
modification (920) d'un mode écran d'un objet affiché sur un écran de l'unité d'affichage (110) selon la direction de pliage, la modification (S910) du mode écran comprenant l'étape :
si l'unité d'affichage (110) est pliée de manière concave par rapport à la surface avant de l'unité d'affichage, déplacement séquentiellement de la pluralité d'objets vers un axe de pliage en fonction de la pression externe, la pluralité d'objets formant une boucle fermée virtuelle, et ainsi les objets qui sont déplacés séquentiellement vers des positions des objets voisins suivants, retournent à leurs positions initiales ; et
le procédé comprenant en outre les étapes d'affichage de manière fixe sur l'axe de pliage d'une interface utilisateur graphique, GUI (611), pour sélectionner l'un de la pluralité d'objets déplacés vers l'axe de pliage ; de sélection d'un objet chevauchant la GUI (611) à un moment où l'unité d'affichage (110) qui a été pliée de manière concave par rapport à la surface avant de l'unité d'affichage revient à son état initial et déplacer et afficher l'objet sélectionné vers un centre de l'écran ; et
déplacement et affichage de l'objet sélectionné vers un centre de l'écran.

10. Procédé selon la revendication 9, la modification (S910) du mode écran comprenant en outre l'étape de réglage d'une forme d'affichage et/ou d'une taille d'un objet affiché sur l'écran selon une distance à partir de l'axe de pliage afin d'afficher une perspective différente d'un objet qui est déplacé vers l'axe de pliage.

11. Procédé selon la revendication 9, la modification (S910) du mode écran comprenant en outre l'étape, si l'unité d'affichage (110) qui a été pliée de manière concave est pliée de manière convexe par rapport à la surface avant de l'unité d'affichage, de déplacement d'un objet, qui est déplacé vers l'axe de pliage, vers un bord de l'écran.

12. Procédé selon la revendication 11, la modification (S910) du mode écran comprenant en outre l'étape de réglage d'une forme d'affichage et/ou d'une taille d'un objet affiché sur l'écran selon une distance modifiée de l'axe de pliage selon une pression externe afin d'afficher une perspective différente d'un objet qui est déplacé vers le bord de l'écran.

13. Support de stockage lisible par ordinateur sur lequel sont stockées des instructions exécutables par ordinateur conçues pour mettre en oeuvre le procédé selon l'une quelconque des revendications 9 à 12.
